# EUROPÄISCHE PATENTSCHRIFT

(11) **EP 2 193 293 B1**
(45) Veröffentlichungstag und Bekanntmachung des Hinweises auf die Patenterteilung: **23.11.2011**
(21) Anmeldenummer: 08803051.5
(22) Anmeldetag: 15.08.2008
(51) Int. Cl.: F16H 47/04

(54) **HYDROSTATISCH-MECHANISCHES LEISTUNGSVERZWEIGUNGSGETRIEBE**
HYDROSTATIC-MECHANICAL POWER SPLIT TRANSMISSION
TRANSMISSION DE RÉPARTITION DE PUISSANCE HYDROSTATIQUE-MÉCANIQUE

(30) Priorität: 02.10.2007 DE 102007047194; 16.07.2008 DE 102008040449
(43) Veröffentlichungstag der Anmeldung: 09.06.2010
(73) Patentinhaber: ZF Friedrichshafen AG, 88038 Friedrichshafen (DE)
(72) Erfinder: LEGNER, Jürgen, 88048 Friedrichshafen (DE); FISCHER, Roland, 88094 Oberteuringen (DE); SIBER, Michael, 72362 Nusplingen (DE)
(86) Internationale Anmeldenummer: PCT/EP2008/060759
(87) Internationale Veröffentlichungsnummer: WO 2009/047037

(56) Entgegenhaltungen:
- WO-A-2006/042434
- DE-A1- 19 954 894
- US-A- 3 023 638
- US-A- 5 868 640

## Beschreibung

Die Erfindung betrifft ein hydrostatisch-mechanisches Leistungsverzweigungsgetriebe nach der im Oberbegriff von Anspruch 1 näher definierten Art.

Die DE 10 2006 025 348 A1 offenbart ein hydrostatisch-mechanisches Leistungsverzweigungsgetriebe mit einem mechanischen Leistungszweig und einem hydrostatischen Leistungszweig, welche in einem Summierungsgetriebe aufsummiert werden, um eine Antriebsachse innerhalb verschiedener Fahrbereiche stufenlos antreiben zu können.

Die DE 10 2006 025 347 B3 offenbart ein Hydromodul, bestehend aus zwei integrierten Schrägachsen-Triebwerken, welche in ihrem Hubvolumen über ein gemeinsames Joch verstellbar sind.
In einer ersten Stellung des Doppeljochs ist die Pumpe auf minimalem Hubvolumen und der Motor auf maximalem Hubvolumen, und bei Verstellen des Doppeljochs wird der Motor in Richtung seines minimalen Hubvolumens und die Pumpe in Richtung ihres maximalen Hubvolumens verstellt.

Die US 5 868 640 A offenbart ein Leistungsverzweigungsgetriebe nach dem Oberbegriff des Hauptanspruchs.

Landwirtschaftliche Fahrzeuge, wie beispielsweise Schlepper, weisen Getriebe mit einer Antriebswelle und einer Abtriebswelle auf, wobei die Antriebswelle und die Abtriebswelle einen geringen Achsabstand aufweisen. Des weiteren ist es notwendig, den Antriebsstrang für einen Schlepper so auszulegen, dass dieser 60 km/h erreichen kann.

Arbeitsmaschinen, wie beispielsweise Radlader, weisen ein Getriebe mit einer Antriebswelle und einer Abtriebswelle auf, welche einen sehr großen Achsabstand haben. Im Gegensatz zu einem Getriebe für ein landwirtschaftliches Fahrzeug besitzt die Antriebswelle für die Vorderachse und die Antriebswelle für die Hinterachse den gleichen Achsabstand von der Antriebswelle des Getriebes, wobei bei einem landwirtschaftlichen Fahrzeug die Antriebswelle zur Hinterachse beabstandet zur Antriebswelle zur Vorderachse ist.

Der vorliegenden Erfindung liegt die Aufgabe zugrunde, ein hydrostatisch-mechanisches Leistungsverzweigungsgetriebe zu schaffen, welches auf einfache Weise für ein landwirtschaftliches Fahrzeug, wie beispielsweise einen Schlepper, und eine Arbeitsmaschine, wie beispielsweise einen Radlader, verwendet werden kann.

Die Aufgabe wird mit einem, auch die kennzeichnenden Merkmale des Hauptanspruchs aufweisenden, gattungsgemäßen hydrostatisch-mechanischen Leistungsverzweigungsgetriebe gelöst.

Erfindungsgemäß weist das hydrostatisch-mechanische Leistungsverzweigungsgetriebe eine Antriebswelle auf, welche beispielsweise mit einem Verbrennungsmotor verbunden ist. Die Antriebswelle treibt einerseits über eine Kupplung für Vorwärtsfahrt über den Planetenträger in das Summierungsgetriebe und andererseits über eine Kupplung für Rückwärtsfahrt in den Planetenträger des Summierungsgetriebes ein.

Vorzugsweise ist die Kupplung für Vorwärtsfahrt koaxial zur Antriebswelle und die Kupplung für Rückwärtsfahrt auf einer Welle angeordnet, welche beabstandet zur Antriebswelle ist. Die Kupplung für Rückwärtsfahrt ist über eine Stirnradstufe mit der Antriebswelle und über eine Stirnradstufe mit dem Planetenträger des Summierungsgetriebes verbunden. Die Kupplung für Vorwärtsfahrt ist ebenfalls für eine Stirnradstufe mit dem Planetenträger des Summierungsgetriebes verbunden. Das Summierungsgetriebe ist als Planetengetriebe ausgeführt, wobei dieses Planetengetriebe mindestens ein Doppelplanetenrad aufweist, welches mit einem ersten Sonnenrad und einem zweiten Sonnenrad und einem Hohlrad im Eingriff steht, wobei das erste Sonnenrad mit einer ersten Hydraulikeinheit und das Hohlrad mit einer zweiten Hydraulikeinheit in Verbindung steht.
Im ersten Fahrbereich wirkt die erste Hydraulikeinheit als Pumpe und die zweite Hydraulikeinheit als Motor.
Im zweiten Fahrbereich wirkt die erste Hydraulikeinheit als Motor und die zweite Hydraulikeinheit als Pumpe.

Vorzugsweise ist das erste Sonnenrad koaxial zu einer Welle der ersten Hydraulikeinheit angeordnet und das zweite Sonnenrad ist über eine Stirnradstufe mit der Welle der zweiten Hydraulikeinheit verbunden, wodurch die Wellen der ersten und zweiten Hydraulikeinheit beabstandet angeordnet sind.

Vorzugsweise sind die Hydraulikeinheiten mit einem Doppeljoch, wie in der DE 10 2006 025 347 B3 offenbart, ausgeführt. Den Stirnradgetrieben mit den Kupplungen für Vorwärtsfahrt und für Rückwärtsfahrt sowie dem Summierungsplanetengetriebe und den beiden Hydraulikeinheiten sind Stirnradgetriebe mit auf Wellen angeordneten Kupplungen nachgeschaltet angeordnet, um mehrere stufenlose Fahrbereiche zu schalten.
Eine Kupplung für einen ersten Fahrbereich ist über eine Stirnradstufe mit der Antriebswelle der zweiten Hy-draulikeinheit verbunden.
Eine Kupplung für einen zweiten Fahrbereich ist über eine Stirnradstufe mit dem zweiten Sonnenrad des Summierungsplanetengetriebes verbunden. Wird die Kupplung des ersten Fahrbereichs im Schließsinne betätigt, so wird eine Abtriebswelle des Getriebes über die Stirnradstufe mit der Antriebswelle der zweiten Hydraulikeinheit verbunden.
Wird die Kupplung für den zweiten Fahrbereich geschlossen, so wird die Abtriebswelle des Getriebes über Stirnradstufen mit dem zweiten Sonnenrad verbunden. Da Zahnräder auf der Abtriebswelle des Getriebes mit Zahnrädern auf der Welle der zweiten Hydraulikeinheit in Wirkverbindung stehen, besteht die Möglichkeit, diese Abtriebswelle räumlich so anzuordnen, dass die Abtriebswelle über eine weitere Stirnradstufe die Antriebsachse für die Hinterachse eines Schleppers antreibt und direkt die Vorderachse des Schleppers antreibt oder über eine Stirnradstufe die Vorder- und Hinterachse eines Radladers antreibt.

Bei der Ausführung für einen Schlepper ist die Stirnradstufe mit der Antriebswelle für die Hinterachse in Richtung Antriebswelle des Getriebes angeordnet, und die Antriebswelle für die Vorderachse des Fahrzeugs verläuft nahezu parallel zur Abtriebswelle des Getriebes.

Um einen weiteren Untersetzungsbereich zu realisieren, befindet sich auf der Welle der zweiten Hydraulikeinheit eine Kupplung für einen dritten Fahrbereich, über welche die Welle der zweiten Hydraulikeinheit über eine Stirnradstufe mit der Abtriebswelle verbindbar ist.

Somit ist es möglich, ohne großen Aufwand ein Leistungsverzweigungsgetriebe mit zwei oder drei Fahrbereichen für ein landwirtschaftliches Fahrzeug oder eine Arbeitsmaschine zu schaffen.

Weitere Merkmale sind der Figuren-Beschreibung zu entnehmen.
Es zeigen:
- Fig. 1: ein Leistungsverzweigungsgetriebe für eine Arbeitsmaschine mit zwei Fahrbereichen;
- Fig. 2: ein Leistungsverzweigungsgetriebe für eine Arbeitsmaschine mit drei Fahrbereichen;
- Fig. 3: ein Leistungsverzweigungsgetriebe für ein landwirtschaftliches Fahrzeug mit zwei Fahrbereichen und

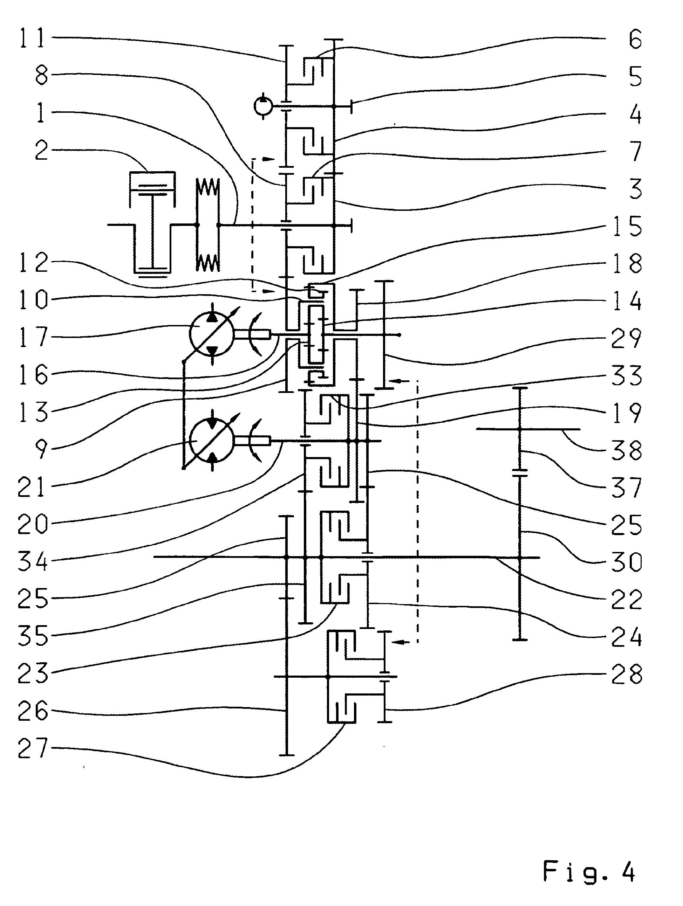

- Fig. 4: ein Leistungsverzweigungsgetriebe für ein landwirtschaftliches Fahrzeug mit drei Fahrbereichen.

### Fig. 1:

Ein Antriebswelle 1 ist mit einem Antriebsmotor 2 drehfest verbunden. Die Antriebswelle 1 treibt über ein Festrad 3 und ein Festrad 4 einen Nebenabtrieb 5 und die Kupplung für Rückwärtsfahrt 6 und die Kupplung für Vorwärtsfahrt 7 an. Die Kupplung für Vorwärtsfahrt 7 ist koaxial zur Antriebswelle 1 und die Kupplung für Rückwärtsfahrt 6 ist beabstandet zur Antriebswelle 1 angeordnet. Durch Schließen der Kupplung für Vorwärtsfahrt treibt die Antriebswelle 1 über ein Losrad 8, welches auf der Antriebswelle 1 angeordnet ist, ein Losrad 9 an, welches mit einem Planetenträger 10 drehfest verbunden ist. Durch Schließen der Kupplung für Rückwärtsfahrt 6 treibt die Antriebswelle 1 über ein Losrad 11 das Losrad 9 an. Auf dem Planetenträger 10 ist mindestens ein Doppelplanetenrad 12 gelagert. Das Doppelplanetenrad 12 steht mit einem ersten Sonnenrad 13 und einem zweiten Sonnenrad 14 sowie einem Hohlrad 15 im Eingriff. Das erste Sonnenrad 13 ist mit einer Welle 16 der ersten Hydraulikeinheit 17 drehfest verbunden. Das Hohlrad 15 ist über das Losrad 18 und das Festrad 19 mit der Welle 20 der zweiten Hydraulikeinheit 21 verbunden. Die Abtriebswelle 22 ist über eine koaxial zur Abtriebswelle 22 angeordnete Kupplung für den ersten Fahrbereich 23, das Losrad 24 und das Festrad 25 mit der Welle 20 verbindbar. Die Abtriebswelle 22 ist über das Festrad 25', das Festrad 26 und die Kupplung für den zweiten Fahrbereich 27, das Losrad 28 und das Festrad 29 mit dem zweiten Sonnenrad 14 verbindbar. Das Festrad 29 ist koaxial zum zweiten Sonnenrad 14 angeordnet, das Festrad 26, die Kupplung für den zweiten Fahrbereich 27 und das Losrad 28 sind koaxial angeordnet, das Festrad 25', die Kupplung für den ersten Fahrbereich 23 und das Losrad 24 sind koaxial zur Abtriebswelle 22 angeordnet. Um einen ausreichenden Achsabstand für einen Radlader zu schaffen, ist auf der Abtriebswelle 22 ein Festrad 30 und ein Festrad 31 angeordnet, wobei das Festrad 31 koaxial zu einer Welle 32 angeordnet ist, welche drehfest mit Antriebsachsen für eine Vorderachse und eine Hinterachse verbindbar ist.

Es besteht die Möglichkeit, beispielsweise für ein landwirtschaftliches Fahrzeug die Welle, welche mit dem Festrad 26 verbunden ist, als Abtriebswelle zu verwenden, wodurch diese die Räder antreibt.

Es besteht auch die Möglichkeit, die Welle 36 zum Antrieb der Räder zu verwenden.

In einer weiteren Ausgestaltungsform kämmt das Losrad 24 direkt mit dem Festrad 19, wodurch das Festrad 25 entfällt.

In einer weiteren Ausgestaltungsform kämmt das Festrad 31 direkt mit dem Festrad 25', wodurch das Festrad 30 entfallen kann.

### Fig. 2:

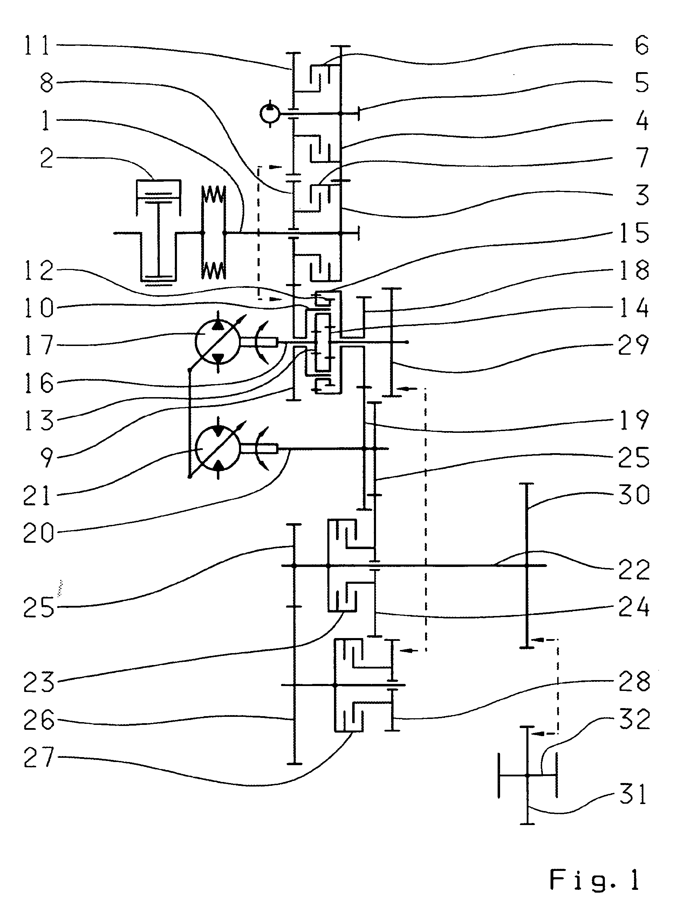

Diese unterscheidet sich von der Fig. 1 ausschließlich dadurch, dass ein dritter Fahrbereich mittels der Kupplung für den dritten Fahrbereich 33 über das Losrad 34 auf das Festrad 35 und von dort auf die Abtriebswelle 22 schaltbar ist.

Somit ist ein erster Fahrbereich in einer Vorwärtsfahrtrichtung durch Schließen der Kupplung für Vorwärtsfahrt 7 und der Kupplung für den ersten Fahrbereich 23 schaltbar.
Ein zweiter Fahrbereich in einer Vorwärtsfahrtrichtung ist durch Schließen der Kupplung für Vorwärtsfahrt 7 und der Kupplung für den zweiten Fahrbereich 27 schaltbar.
Ein dritter Fahrbereich in einer Vorwärtsfahrtrichtung ist durch Schalten der Kupplung für Vorwärtsfahrt 7 und der Kupplung für den dritten Fahrbereich 33 schaltbar.

Ein erster Fahrbereich in einer Rückwärtsfahrtrichtung ist durch Schalten der Kupplung für Rückwärtsfahrt 6 und der Kupplung für den ersten Fahrbereich 23 schaltbar.
Ein zweiter Fahrbereich in einer Rückwärtsfahrtrichtung ist durch Schalten der Kupplung für Rückwärtsfahrt 6 und der Kupplung für den zweiten Fahrbereich 27 schaltbar.
Ein dritter Fahrbereich in einer Rückwärtsfahrtrichtung ist durch Schalten der Kupplung für Rückwärtsfahrt 6 und der Kupplung für den dritten Fahrbereich 33 schaltbar.

### Fig. 3:

Diese unterscheidet sich von der Fig. 1 ausschließlich dadurch, dass die Abtriebswelle 22 direkt mit einer Welle 36 zur Verbindung mit einer Vorderachse des Schleppers drehfest verbunden ist, und ein Festrad 37 mit dem Festrad 30 kämmt und eine Welle 38 zum Antrieb der Hinterachse antreibt. Die Welle 38 ist in Richtung der Antriebswelle 1 angeordnet, da ein Schlepper einen geringen Achsabstand zwischen der Antriebswelle 1 und der Welle 38 benötigt, die Welle 36 weist einen größeren Achsabstand zur Antriebswelle 1 auf, um unter dem Antriebsmotor die Vorderachse antreiben zu können.

### Fig. 4:

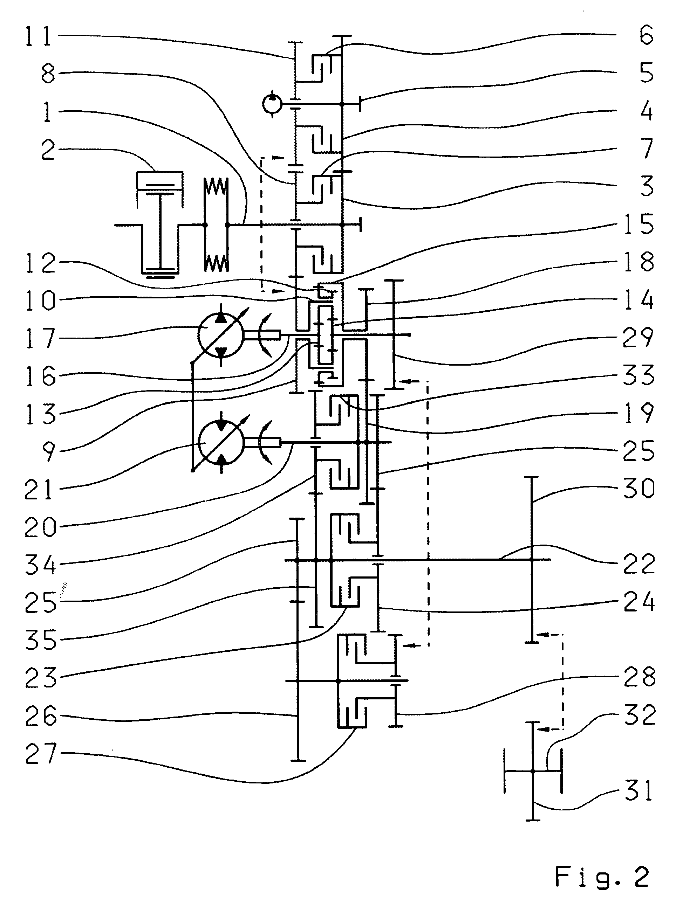

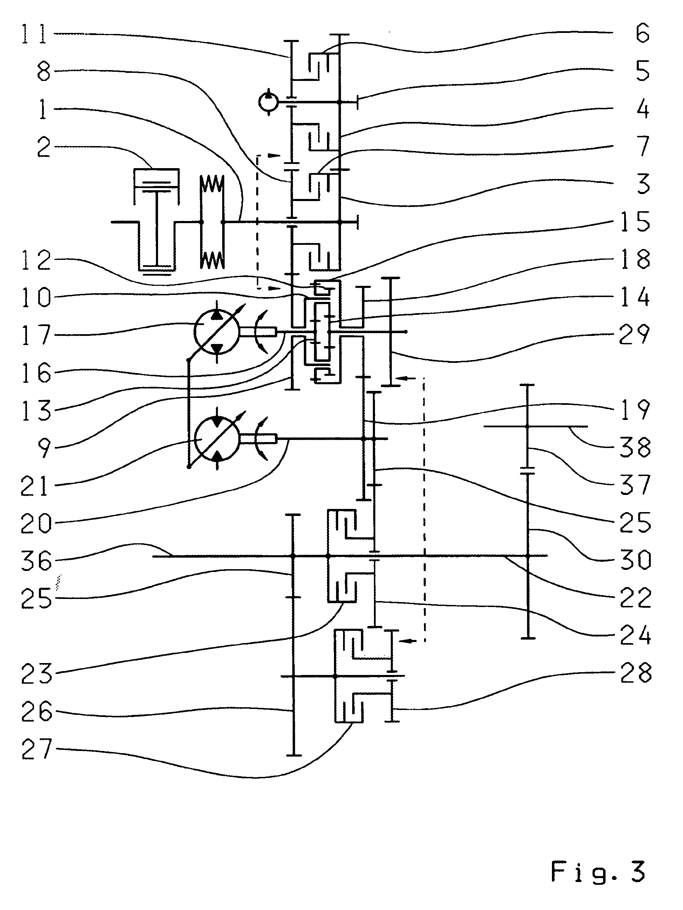

Diese unterscheidet sich von der Fig. 3 ausschließlich dadurch, dass der dritte Fahrbereich, wie in der Fig. 2 dargestellt, vorhanden ist.

### Bezugszeichen

- 1: Antriebswelle
- 2: Antriebsmotor
- 3: Festrad
- 4: Festrad
- 5: Nebenabtrieb
- 6: Kupplung für Rückwärtsfahrt
- 7: Kupplung für Vorwärtsfahrt
- 8: Losrad
- 9: Losrad
- 10: Planetenträger
- 11: Losrad
- 12: Doppelplanetenrad
- 13: erstes Sonnenrad
- 14: zweites Sonnenrad
- 15: Hohlrad
- 16: Welle
- 17: erste Hydraulikeinheit
- 18: Losrad
- 19: Festrad
- 20: Welle
- 21: zweite Hydraulikeinheit
- 22: Abtriebswelle
- 23: Kupplung für den ersten Fahrbereich
- 24: Losrad
- 25: Festrad
- 25': Festrad
- 26: Festrad
- 27: Kupplung für den zweiten Fahrbereich
- 28: Losrad
- 29: Festrad
- 30: Festrad
- 31: Festrad
- 32: Welle
- 33: Kupplung für den dritten Fahrbereich
- 34: Losrad
- 35: Festrad
- 36: Welle
- 37: Festrad
- 38: Welle

## Patentansprüche

1. Hydrostatisch-mechanisches Leistungsverzweigungsgetriebe mit einer Antriebswelle (1), welche über eine Kupplung für Vorwärtsfahrt (7) und eine Kupplung für Rückwärtsfahrt (6) mit einem Planetenträger (10) eines Summierungsgetriebes verbindbar ist, **dadurch gekennzeichnet, dass** das Summierungsgetriebe ein erstes Sonnenrad (13), ein zweites Sonnenrad (14), mindestens ein auf dem Planetenträger (10) gelagertes Doppelplanetenrad (12) und ein Hohlrad (15) aufweist, wobei eine erste Hydraulikeinheit (17) des hydraulischen Leistungszweigs mit dem ersten Sonnenrad (13) drehfest verbunden ist und eine zweite Hydraulikeinheit (21) des hydraulischen Leistungszweigs über eine Stirnradstufe mit dem Hohlrad (15) verbunden ist, wobei die zweite Hydraulikeinheit (21) über eine weitere Stirnradstufe und eine Kupplung für einen ersten Fahrbereich (23) mit einer Abtriebswelle (22) in Verbindung bringbar ist, und das zweite Sonnenrad (14) über eine weitere Stirnradstufe mit einer Kupplung für einen zweiten Fahrbereich (27) mit der Abtriebswelle (22) in Verbindung bringbar ist.

2. Hydrostatisch-mechanisches Leistungsverzweigungsgetriebe nach Anspruch 1, **dadurch gekennzeichnet, dass** die Kupplung für Vorwärtsfahrt (7) koaxial zur Antriebswelle (1) und die Kupplung für Rückwärtsfahrt (6) und das Summierungsgetriebe beabstandet zur Antriebswelle (1) angeordnet sind.

3. Hydrostatisch-mechanisches Leistungsverzweigungsgetriebe nach Anspruch 1, **dadurch gekennzeichnet, dass** die zweite Hydraulikeinheit (21) über eine Kupplung für einen dritten Fahrbereich (33) mit der Abtriebswelle (22) in Verbindung bringbar ist, wobei diese Kupplung (33) koaxial zu einer Antriebswelle (20) der zweiten Hydraulikeinheit (21) angeordnet ist.

4. Hydrostatisch-mechanisches Leistungsverzweigungsgetriebe nach Anspruch 1, **dadurch gekennzeichnet, dass** die Kupplung für den ersten Fahrbereich (23) koaxial zu einer Abtriebswelle (22) angeordnet ist.

5. Hydrostatisch-mechanisches Leistungsverzweigungsgetriebe nach Anspruch 4, **dadurch gekennzeichnet, dass** die Abtriebswelle (22) über eine Stirnradstufe (30, 37) eine Eingangswelle (38) einer Antriebsachse eines Fahrzeugs antreibt.

6. Hydrostatisch-mechanisches Leistungsverzweigungsgetriebe nach Anspruch 5, **dadurch gekennzeichnet, dass** die Stirnradstufe, über welche die Abtriebswelle (22) die Eingangswelle (38) der Antriebsachse antreibt, zur Verwendung in einer Landmaschine in Richtung der Antriebswelle (1) angeordnet ist.

7. Hydrostatisch-mechanisches Leistungsverzweigungsgetriebe nach Anspruch 5, **dadurch gekennzeichnet, dass** die Stirnradstufe, über welche die Abtriebswelle (22) die Eingangswelle (32) der Antriebsachse antreibt, zur Verwendung in einer Arbeitsmaschine von der Antriebswelle (1) abgewandt angeordnet ist.

8. Hydrostatisch-mechanisches Leistungsverzweigungsgetriebe nach Anspruch 1, **dadurch gekennzeichnet, dass** die Kupplung für den zweiten Fahrbereich (27) koaxial zu einem Festrad (26) einer Stirnradstufe angeordnet ist, deren weiteres Festrad (25) koaxial zur Abtriebswelle (22) angeordnet ist.

9. Hydrostatisch-mechanisches Leistungsverzweigungsgetriebe nach Anspruch 1, **dadurch gekennzeichnet, dass** die erste Hydraulikeinheit (17) und die zweite Hydraulikeinheit (21) als Schrägachseneinheiten mit einem gemeinsamen Joch ausgebildet sind.

10. Hydrostatisch-mechanisches Leistungsverzweigungsgetriebe nach Anspruch 1, **dadurch gekennzeichnet, dass** die hydrostatischen Einheiten (17, 21) und die Übersetzungsbereiche so ausgeführt sind, dass Bereichswechsel bei synchronen Kupplungsdrehzahlen durchgeführt werden.

## Claims

1. Hydrostatic-mechanical power split transmission having a drive input shaft (1) which can be connected via a clutch for forward travel (7) and a clutch for reverse travel (6) to a planet carrier (10) of a summing gearing, **characterized in that** the summing gearing has a first sun gear (13), a second sun gear (14), at least one double planet gear (12) mounted on the planet carrier (10), and an internal gear (15), wherein a first hydraulic unit (17) of the hydraulic power branch is connected to the first sun gear (13) for conjoint rotation therewith and a second hydraulic unit (21) of the hydraulic power branch is connected to the internal gear (15) via a spur gear stage, wherein the second hydraulic unit (21) can be placed in connection with a drive output shaft (22) via a further spur gear stage and a clutch for a first drive range (23), and the second sun gear (14) can be connected to the drive output shaft (22) via a further spur gear stage with a clutch for a second drive range (27).

2. Hydrostatic-mechanical power split transmission according to Claim 1, **characterized in that** the clutch for forward travel (7) is arranged coaxially with respect to the drive input shaft (1), and the clutch for reverse travel (6) and the summing gearing are arranged spaced apart from the drive input shaft (1).

3. Hydrostatic-mechanical power split transmission according to Claim 1, **characterized in that** the second hydraulic unit (21) can be placed in connection with the drive output shaft (22) via a clutch for a third drive range (33), wherein said clutch (33) is arranged coaxially with respect to a drive shaft (20) of the second hydraulic unit (21).

4. Hydrostatic-mechanical power split transmission according to Claim 1, **characterized in that** the clutch for the first drive range (23) is arranged coaxially with respect to a drive output shaft (22).

5. Hydrostatic-mechanical power split transmission according to Claim 4, **characterized in that** the drive output shaft (22) drives an input shaft (38) of a drive axle of a vehicle via a spur gear stage (30, 37).

6. Hydrostatic-mechanical power split transmission according to Claim 5, **characterized in that** the spur gear stage via which the drive output shaft (22) drives the input shaft (38) of the drive axle is arranged, for use in an agricultural machine, in the direction of the drive input shaft (1).

7. Hydrostatic-mechanical power split transmission according to Claim 5, **characterized in that** the spur gear stage via which the drive output shaft (22) drives the input shaft (32) of the drive axle is arranged, for use in a working machine, so as to face away from the drive input shaft (1).

8. Hydrostatic-mechanical power split transmission according to Claim 1, **characterized in that** the clutch for the second drive range (27) is arranged coaxially with respect to a fixed gear (26) of a spur gear stage, the further fixed gear (25) of which spur gear stage is arranged coaxially with respect to the drive output shaft (22).

9. Hydrostatic-mechanical power split transmission according to Claim 1, **characterized in that** the first hydraulic unit (17) and the second hydraulic unit (21) are designed as swashplate-type units with a common yoke.

10. Hydrostatic-mechanical power split transmission according to Claim 1, **characterized in that** the hydrostatic units (17, 21) and the transmission ratio ranges are designed such that range changes are carried out at synchronous clutch rotational speeds.

## Revendications

1. Transmission à répartition de puissance hydrostatique-mécanique comprenant un arbre d'entraînement (1) qui peut être connecté par le biais d'un embrayage pour la conduite en marche avant (7) et par le biais d'un embrayage pour la conduite en marche arrière (6) à un porte-satellites (10) d'une transmission additive, **caractérisée en ce que** la transmission additive présente une première roue solaire (13), une deuxième roue solaire (14), au moins un double pignon planétaire (12) monté sur le porte-satellites (10) et une couronne (15), une première unité hydraulique (17) de la branche de puissance hydraulique étant connectée de manière solidaire en rotation à la première roue solaire (13) et une deuxième unité hydraulique (21) de la branche de puissance hydraulique étant connectée par le biais d'un étage à pignon droit à la couronne (15), la deuxième unité hydraulique (21) pouvant être amenée en liaison avec un arbre de sortie (22) par le biais d'un étage à pignon droit supplémentaire et d'un embrayage pour une première plage de conduite (23), et la deuxième roue solaire (14) pouvant être amenée en liaison avec l'arbre de sortie (22) par le biais d'un étage à pignon droit supplémentaire avec un embrayage pour une deuxième plage de conduite (27).

2. Transmission à répartition de puissance hydrostatique-mécanique selon la revendication 1, **caractérisée en ce que** l'embrayage pour la conduite en marche avant (7) est disposé coaxialement à l'arbre d'entraînement (1) et l'embrayage pour la conduite en marche arrière (6) et la transmission additive sont disposés à distance de l'arbre d'entraînement (1).

3. Transmission à répartition de puissance hydrostatique-mécanique selon la revendication 1, **caractérisée en ce que** la deuxième unité hydraulique (21) peut être amenée en liaison avec l'arbre de sortie (22) par le biais d'un embrayage pour une troisième plage de conduite (33), cet embrayage (33) étant disposé coaxialement à un arbre d'entraînement (20) de la deuxième unité hydraulique (21).

4. Transmission à répartition de puissance hydrostatique-mécanique selon la revendication 1, **caractérisée en ce que** l'embrayage pour la première plage de conduite (23) est disposé coaxialement à un arbre de sortie (22).

5. Transmission à répartition de puissance hydrostatique-mécanique selon la revendication 4, **caractérisée en ce que** l'arbre de sortie (22) entraîne un arbre d'entrée (38) d'un essieu moteur d'un véhicule par le biais d'un étage à pignon droit (30, 37).

6. Transmission à répartition de puissance hydrostatique-mécanique selon la revendication 5, **caractérisée en ce que** l'étage à pignon droit, par le biais duquel l'arbre de sortie (22) entraîne l'arbre d'entrée (38) de l'essieu moteur, est disposé dans la direction de l'arbre d'entraînement (1) en vue de l'utilisation dans une machine agricole.

7. Transmission à répartition de puissance hydrostatique-mécanique selon la revendication 5, **caractérisée en ce que** l'étage à pignon droit par le biais duquel l'arbre de sortie (22) entraîne l'arbre d'entrée (32) de l'essieu moteur, est disposé à l'opposé de l'arbre d'entraînement (1) en vue de l'utilisation dans un engin de travail.

8. Transmission à répartition de puissance hydrostatique-mécanique selon la revendication 1, **caractérisée en ce que** l'embrayage pour la deuxième plage de conduite (27) est disposé coaxialement à un pignon fixe (26) d'un étage à pignon droit, dont le pignon fixe supplémentaire (25) est disposé coaxialement à l'arbre de sortie (22).

9. Transmission à répartition de puissance hydrostatique-mécanique selon la revendication 1, **caractérisée en ce que** la première unité hydraulique (17) et la deuxième unité hydraulique (21) sont réalisées sous forme d'unités à axes obliques avec un joug commun.

10. Transmission à répartition de puissance hydrostatique-mécanique selon la revendication 1, **caractérisée en ce que** les unités hydrostatiques (17, 21) et les plages de multiplication sont réalisées de telle sorte que des changements de plages sont réalisés dans le cas de vitesses de rotation d'embrayages synchrones.
